# EUROPEAN PATENT SPECIFICATION

(11) **EP 1 697 551 B1**
(45) Date of publication and mention of the grant of the patent: **22.07.2015**
(21) Application number: 04801724.8
(22) Date of filing: 07.12.2004
(51) Int. Cl.: C22C 29/08

(54) **CEMENTED CARBIDE TOOLS FOR MINING AND CONSTRUCTION APPLICATIONS AND METHOD OF MAKING THE SAME**
HARTMETALLWERKZEUGE FÜR BERGBAU- UND KONTRUKTIONSANWENDUNGEN UND HERSTELLUNGSVERFAHREN DAFÜR
OUTILS EN CARBURE CEMENTE DESTINES A DES APPLICATIONS MINIERES ET A DES APPLICATIONS DE CONSTRUCTION ET LEUR PROCEDE DE FABRICATION

(30) Priority: 15.12.2003 SE 0303360; 22.12.2003 SE 0303486
(43) Date of publication of application: 06.09.2006
(73) Proprietor: Sandvik Intellectual Property AB, 811 81 Sandviken (SE)
(72) Inventor: TILLMAN, Mathias, Balsall Common CV7 7RT (GB); NORGREN, Susanne, S-14141 Huddinge (SE); COLLIN, Marianne, S-128 38 Skarpnäck (SE)
(86) International application number: PCT/SE2004/001817
(87) International publication number: WO 2005/056854

(56) References cited:
- EP-A1- 0 194 018
- EP-A2- 0 257 869
- US-A- 4 843 039
- US-A- 5 623 723

## Description

The present invention relates to cemented carbide bodies preferably used in tools for drilling/cutting of rock and mineral. Also cemented carbide tools used for asphalt and concrete are included. More specifically, the invention pertains to cemented carbide tools made via sintering techniques wherein there are two distinct microstructural zones having complementary properties.

In cemented carbides, the grain size, as well as the binder phase (e.g., cobalt) content, each has an influence on the performance of the composite. For example, a smaller/finer grain size of the tungsten carbide results in a more wear resistant material. An increase in cobalt content typically leads to an increase in toughness.

Cemented carbides having a fine grain size are produced through the incorporation of grain refiners in the initial powder blend. Such cemented carbide has a fine grain size throughout its microstructure. Cemented carbide with a coarse grain size is produced via sintering without the incorporation of any grain refiners since the tendency of a cemented carbide like a WC-Co composite is for the WC grains to coarsen during sintering. Such cemented carbide has a coarse grain size throughout its microstructure. As can be appreciated, these hard bodies have a uniform microstructure throughout the cemented carbide body.

Cemented carbide bodies having at least two distinct microstructural zones are known in the art. For example drills having a core of a tough cemented carbide grade and a cover of a more wear resistant grade are disclosed in EP-A-951576.

EP-A-194018 relates to a wire drawing die made from a central layer with coarse grained tungsten carbide particles and a peripheral layer with finer grained tungsten carbide particles. Initially the layers have the same content of cobalt. After sintering the coarse grained layer in the center is reduced in cobalt content.

EP-A-257869 discloses a rock bit button made with a wear resistant tip portion and a tough core. The tip portion is made from a powder with low Co-content and a fine WC grain size and the core portion is made from a powder with high Co content and coarse WC grains. Nothing is disclosed about the Co-content in the two portions after sintering. However, also in this case the Co-content in the coarse grained portion will be reduced at the expense of the Co-content in the fine grained layer. A similar disclosure is found in US 4,359,335.

An alternative approach is disclosed in US 4,743,515, which discloses cemented carbide bodies, preferably for rock drilling and mineral cutting. The bodies comprise a core of cemented carbide containing eta-phase surrounded by a surface zone of cemented carbide free of eta-phase and having a low content of cobalt in the surface and a higher content of cobalt next to the eta-phase zone. US 4,843,039 is similar, but it relates to cutting tool inserts for metal machining.

US 5,623,723 discloses a method of making a cemented carbide body with a wear resistant surface zone. The method includes the following steps: providing a compact of cemented carbide; placing a powder of grain refiner on at least one portion of the exposed surface of the compact; and heat treating the compact and grain refiner powder so as to diffuse the grain refiner toward the center of the green compact thereby forming a surface zone inwardly from the exposed surface in which the grain refiner was placed, and forming an interior zone. As a result a cemented carbide body is obtained with a surface zone having a grain size that is smaller but with a Co-content that is higher than that of the interior portion of the body. This means that the increased wear resistance that is obtained as a result of the smaller WC grain size is to a certain extent lost by the increase in Co-content.

It is therefore the object of the present invention to provide a cemented carbide body with a surface zone with a low binder phase content and fine WC grain size and thus high wear resistance and a method of making the same.

It is a further object of the present invention to provide a cemented carbide insert/button with compressive stresses in the surface portion which has a positive effect upon the strength and the toughness of the insert/button.

It has now surprisingly been found that it is possible from a single mixture of tungsten carbide and binder to obtain a cemented carbide body with a surface portion with a smaller grain size and a lower cobalt content than those in the interior portion.

Fig 1 is a graph showing hardness (HV3) and cobalt content (WDS-analysis) versus distance from the surface where the grain refiner powder was placed on a button for mining application according to the invention.

Fig 2 is a graph showing chromium content (WDS-analysis) versus distance from the surface where the grain refiner powder was placed on a button according to the invention.

Fig 3a is a micrograph showing the microstructure at a distance of 20 µm from the surface where the grain refiner powder was placed (FEG-SEM, 2000X, BSE mode) on a button according to the invention.

Fig 3b is a micrograph showing the microstructure at a distance of 2.5 mm from the surface where the grain refiner powder was placed (FEG-SEM, 2000X, BSE mode) in a button according to the invention.

Fig 3c is a micrograph showing the microstructure in the interior portion (center) of the button (FEG-SEM, 2000X, BSE mode) according to the invention.

According to the present invention there is provided a cemented carbide tool insert/button for mining and construction applications comprising at least one surface portion, the surface zone poor in binder has a width of 0.05-0.9 of the diameter/width of the cemented carbide body, preferably 0.1-0.5, most preferably 0.15-0.4 and the grain size is smaller than in the interior portion and the Co-content is lower than that in the interior portion resulting in compressive stresses at the surface after sintering. More particularly the Co-content of the surface portion is <1, preferably <0.9, most preferably <0.75 of the Co-content in the interior portion and the WC grain size of the surface zone is <1, preferably <0.9, most preferably <0.8 of the WC grain size in the interior portion. The surface zone contains Cr such that the ratio between the parameter A=((wt-% Cr/wt-% binder phase)+0.01) in the surface portion and the parameter B=((wt-% Cr/wt-% binder phase)+0.01) taken at the part of the body that is characterized by the lowest Cr content is A/S >1.5, preferably A/B>3.0. In addition there is a maximum in Co-content between the fine grained and the coarse grained portion.

The composition of the cemented carbide is WC+Co with a nominal Co-content of 4-25 wt-%, preferably 5-10 wt-% and a nominal WC grain size, arithmetic mean of intercept, of 1-15 µm, preferably 1.5-5 µm.

In one embodiment the cemented carbide contains η-phase.

The present invention also relates to a method of making a cemented carbide body with a wear resistant surface zone including the following steps:
- providing a compact of cemented carbide made from a single powder comprising powders forming hard constituents and binder phase of Co and/or Ni;
- possibly grind the compact to desired shape and size;
- placing a powder of grain refiner containing on at least one portion of the exposed surface of the compact by dipping, spraying, painting applying a thin tape or in any other way, preferably being any chromium carbide (Cr₃C₂, Cr₂₃C₆ and Cr₇C₃ or mixtures of these) or a mixture of chromium and carbon or other compounds containing chromium and carbon and/or nitrogen;
- sintering the compact and grain refiner powder so as to diffuse the grain refiner away from the surface(s) of grain refiner application thereby forming a gradient zone characterised of low binder phase content, higher chromium content and lower WC grain size compared to the interior portion.
- possibly adding an isostatic gas pressure during the final stage of sintering to obtain a dense body;
- possibly post-HIP-ing at a temperature lower than the sintering temperature and at a pressure of 1-100 MPa;
- possibly grinding to final shape;
- possibly removing undesired carbides and/or graphite from the surface using grinding or any other mechanical method;

Sintering is performed for shortest possible time to obtain a dense body with a surface portion with a smaller grain size and lower cobalt content than those in the interior portion.

The nominal carbon content of the cemented carbide compact shall be determined by consideration of the carbon contribution from the applied grain refiner. Also compacts that would result in a eta-phase containing microstructure can be used. The sintering shall be performed for shortest possible time to obtain the desired structure and a body with closed porosity, preferably a dense body. This time depends on the grain size of WC and the composition of the cemented carbide and can therefore not be closer defined. It is within the purview of the person skilled in the art to determine whether the requisite structure has been obtained and to modify the sintering conditions in accordance with the present specification. If necessary the body can be post-HIP-ed at a lower HIP-temperature compared to the sintering temperature and at a pressure of 2-100 MPa.

Alternatively, the grain refiner/chromium carbide powder is placed on a pre-sintered body that is subsequently heat treated to obtain the desired structure at a temperature higher than the temperature for pre-sintering.

### Example 1

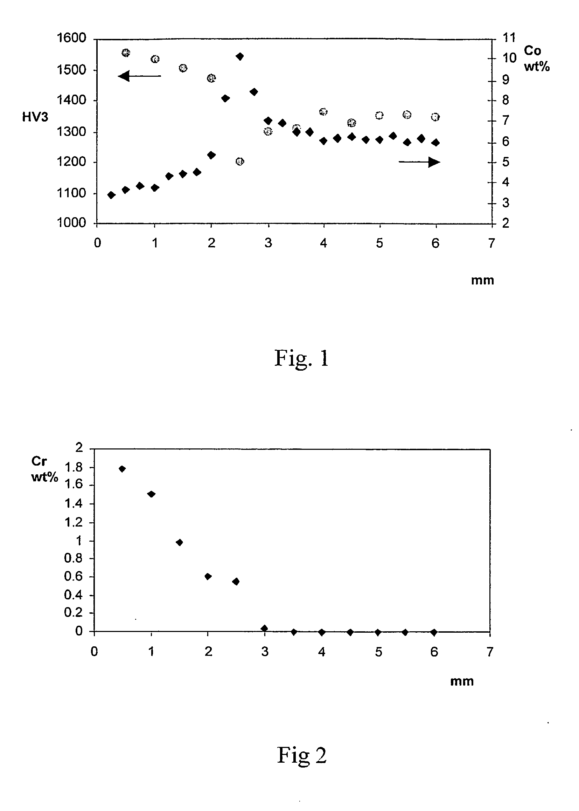

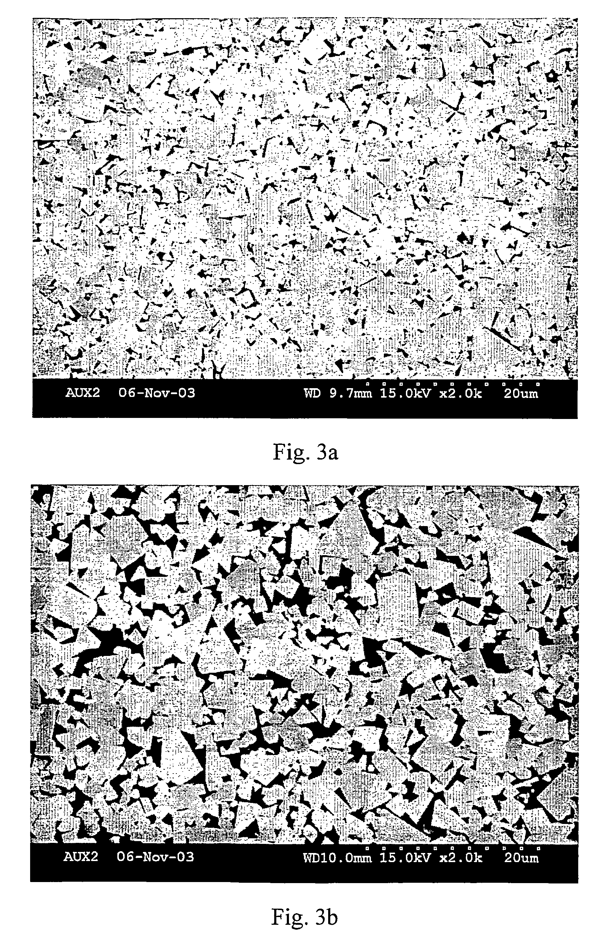

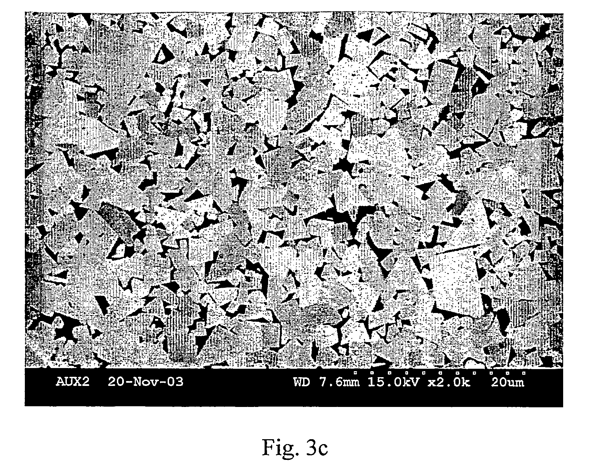

Cemented carbide compacts were made according to the following: Cylindrical green compacts were pressed (diameter 12mm) from a powder with the composition of 94 weight-% WC and 6 weight-% Co. The WC raw material was relative coarse-grained with an average grain size of 3.0 µm (FSSS). All surfaces were covered with a Cr₃C₂ containing thin layer (0.02 g Cr₃C₂/cm²). Thereafter the compacts were sintered at 1350°C for 30 minutes. During the last 15 minutes of the sintering an isostatic gas pressure of 10 MPa was applied to obtain a dense body. A cross-section of the sintered button was examined. No Cr₃C₂ could be seen on the surface. Figure 1 shows a graph of hardness and cobalt content versus the distance to the previously Cr₃C₂-covered surface. The cobalt content is lowest close to the surface and increases with increasing distance to a max value and then decreases again. The hardness is highest close to the surface and decreases with the distance to a min value and then increases again towards the center. Figure 2 shows a graph of chromium content versus the distance to the previously Cr₃C₂-covered surface. The chromium content is highest close to the surface and decreases with the distance. Figure 3a is a micrograph showing the microstructure at a distance of 20 µm from the previously Cr₃C₂-covered surface (FEG-SEM, 2000X, BSE mode). Figure 3b is a micrograph showing the microstructure at a distance of 2.5 mm from the previously Cr₃C₂-covered surface (FEG-SEM, 2000X, BSE mode). Figure 3c is a micrograph showing the microstructure in the interior portion (6 mm from the previously Cr₃C₂-covered surface) of the button (FEG-SEM, 2000X, BSE mode). The WC-grain sizes measured as arithmetic mean of intercept values are presented in table 1. Table 1.

| Distance from surface | Mean grain size [µm] |
|---|---|
| 20 µm | 1.5 |
| 2.5 mm | 1.8 |
| 6. 0 mm | 1.8 |

## Claims

1. Cemented carbide tool insert/button for mining and construction comprising hard constituents in a binder phase of Co and/or Ni and at least one surface portion and an interior portion in which surface portion the grain size is smaller than in the interior portion **characterized in that**
the surface portion with the fine grain size has a lower binder phase content than the interior portion, there is a maximum in Co-content between the fine grained and the coarse grained portion, and
the surface portion contains Cr such that the ratio between the parameter A=((wt-% Cr/wt-% binder phase)+0.01) in the surface portion and the parameter B=((wt-% Cr/wt-% binder phase)+0.01) taken at the part of the body that is **characterized by** the lowest Cr content is A/B >1.5.

2. Cemented carbide insert/button according to the preceding claim **characterized in that** the binder phase content of the surface portion is <1, preferably <0.9, most preferably <0.75 of that in the interior portion.

3. Cemented carbide insert/button according to any of the preceding claims **characterized in that** the WC grain size of the surface portion is <1, preferably <0.9, most preferably <0.8 of that in the interior portion.

4. Cemented carbide insert/button according to any of the preceding claims **characterized in that** the surface portion contains Cr such that the ratio between the parameter A= ((wt-% Cr/wt-% binder phase)+0.01) in the surface portion and the parameter B= (wt-% Cr/wt-% binder phase)+0.01) taken at the part of the body that is **characterized by** the lowest Cr content is A/B>3.0.

5. Cemented carbide body according to any of the preceding claims **characterized in that** the surface zone poor in binder has a width of 0.05-0.9 of the diameter/width of the cemented carbide body, preferably 0.1-0.5, most preferably 0.15-0.4.

6. Cemented carbide body according to any of the preceding claims **characterized in that** the composition of the cemented carbide is WC+binder with a nominal binder phase content of 4-25 wt-%, preferably 5-10 wt-% and a nominal as sintered WC grain size, arithmetic mean of intercept, of 1-15 µm, preferably 1.5-5 µm.

7. Cemented carbide body according to any of the preceding claims **characterized in** comprising η-phase.

8. Method of making a cemented carbide body with a wear resistant surface zone according to claim 1 including the following steps:
- providing a compact of cemented carbide from a single powder;
- possibly presintering the compact and grind to desired shape and size;
- placing a powder of grain refiner containing carbon and/or nitrogen on at least one portion of the exposed surface of the compact/presintered blank, preferably containing Cr;
- sintering the compact/presintered blank and grain refiner powder so as to diffuse the grain refiner toward the center of the body thereby forming a surface zone inwardly from the exposed surface on which the grain refiner was placed, and forming an interior zone;
- possibly adding an isostatic gas pressure during the final stage of sintering to obtain a dense body;
- possibly post-HIP-ing at a temperature lower than the sintering temperature and at a pressure of 1-100 MPa;
- possibly grinding to final shape;
- possibly removing undesired carbides and/or graphite from the surface using grinding or any other mechanical method;
**characterized in that** said sintering is performed for a time such to obtain a dense body with a surface portion with a smaller grain size and lower cobalt content than those in the interior portion, and a maximum in Co-content between the fine grained and the coarse grained portion.

## Patentansprüche

1. Hartmetallwerkzeugeinsatz/-knopf für Bergbau und Bauarbeiten, welche harte Bestandteile in einer Binderphase aus Co und/oder Ni und zumindest einen Oberflächenbereich und einen inneren Bereich hat, wobei im Oberflächenbereich die Korngröße kleiner als im inneren Bereich ist, **dadurch gekennzeichnet, dass**
der Oberflächenbereich mit kleiner Korngröße einen geringeren Gehalt an Binderphase hat als der innere Bereich, wobei ein Maximum an Co-Gehalt zwischen dem feinkörnigen und dem grobkörnigen Bereich vorliegt, und der Oberflächenbereich Cr enthält, sodass das Verhältnis zwischen dem Parameter A=((Gew.-% Cr/Gew.-% Binderphase)+0,01) in dem Oberflächenbereich und dem Parameter B=((Gew.-% Cr/Gew.-% Binderphase)+0,01), bestimmt an dem Teil des Körpers, der durch den geringsten Cr-Gehalt gekennzeichnet ist, A/B>1,5 beträgt.

2. Hartmetalleinsatz/-knopf nach dem vorstehenden Anspruch, **dadurch gekennzeichnet, dass** der Binderphasengehalt des Oberflächenbereiches <1 mal, vorzugsweise <0,9 mal, und besonders bevorzugt <0,75 mal demjenigen im inneren Bereich beträgt.

3. Hartmetalleinsatz/-knopf nach einem der vorstehenden Ansprüche, **dadurch gekennzeichnet, dass** die WC-Korngröße des Oberflächenbereiches <1 mal, vorzugsweise <0,9 mal, besonders bevorzugt <0,8 mal derjenigen des inneren Bereiches beträgt.

4. Hartmetalleinsatz/-knopf nach einem der vorstehenden Ansprüche, **dadurch gekennzeichnet, dass** der Oberflächenbereich Cr enthält, sodass das Verhältnis zwischen dem Parameter A=((Gew.-& Cr/Gew.-% Binderphase)+0,01) in dem Oberflächenbereich und dem Parameter B=((Gew.-% Cr/Gew.-% Binderphase)+0,01), bestimmt an demjenigen Teil des Körpers, der durch den geringsten Cr-Gehalt gekennzeichnet ist, A/B>3,0 beträgt.

5. Hartmetallkörper nach einem der vorstehenden Ansprüche, **dadurch gekennzeichnet, dass** die Oberflächenzone, welche einen geringen Bindergehalt hat, eine Weite von 0,05-0,09 mal dem Durchmesser/Breite des Sintercarbidkörpers, vorzugsweise das 0,1-0,5-fache, und besonders bevorzugt das 0,15-0,4-fache des Durchmessers/der Breite hat.

6. Hartmetallkörper nach einem der vorstehenden Ansprüche, **dadurch gekennzeichnet, dass** die Zusammensetzung des Hartmetalls aus WC+Binder besteht mit einem nominellen Binderphasengehalt von 4-25 Gew.-%, vorzugsweise 5-10 Gew.-% und einer nominellen WC-Korngröße im gesinterten Zustand mit einem arithmetischen Mittel der Durchtrittslänge (intercept length) von 1-15 µm, vorzugsweise 1,5-5 µm hat.

7. Hartmetallkörper nach einem der vorstehenden Ansprüche, **dadurch gekennzeichnet, dass** er η-Phase aufweist.

8. Verfahren zum Herstellen eines Hartmetallkörpers mit einer verschleißfesten Oberflächenzone nach Anspruch 1, welches die folgenden Schritte aufweist:
- Bereitstellen eines Presslings aus Hartmetall bzw. Sintercarbid aus einem einzigen Pulver,
- gegebenenfalls Vorsintern des Presslings und Schleifen auf eine gewünschte Form und Größe,
- Anordnen eines Pulvers aus einem Kornverfeinerungsmittel, welches Kohlenstoff und/oder Stickstoff enthält, auf zumindest einem Teil der freiliegenden Oberfläche des Presslings/vorgesinterten Rohlings, welches vorzugsweise Cr enthält,
- Sintern des Presslings/vorgesinterten Rohlings und des Kornverfeinerungspulvers, um so das Kornverfeinerungsmittel in Richtung des Inneren des Körpers diffundieren zu lassen und dadurch eine Oberflächenzone auf der Innenseite der freiliegenden Oberfläche, auf welcher das Kornverfeinerungsmittel angeordnet war, zu bilden, und Bilden einer inneren Zone,
- gegebenenfalls Hinzufügen eines isostatischen Gasdruckes während der abschließenden Stufe des Sinterns, um einen dichten Körper zu erhalten,
- gegebenenfalls Nachsintern mit HIP (unter hochisostatischem Druck) bei einer Temperatur, die niedriger ist als die Sintertemperatur und bei einem Druck von 1-100 MPa,
- gegebenenfalls Schleifen zu einer endgültigen Form,
- gegebenenfalls Entfernen unerwünschter Carbide und/oder Graphit von der Oberfläche unter Verwendung von Schleifen oder einer anderen mechanischen Methode,
**dadurch gekennzeichnet, dass** das Sintern für eine Zeitdauer ausgeführt wird, dass man einen dichten Körper mit einem Oberflächenbereich mit einer kleineren Korngröße und einem niedrigeren Kobaltgehalt als in dem inneren Bereich erhält, und einem Maximum des Co-Gehaltes zwischen dem feinkörnigen und dem grobkörnigen Bereich.

## Revendications

1. Plaquette/pastille d'outil en carbure cémenté pour l'exploitation minière et la construction comprenant des constituants durs dans une phase de liant de Co et/ou Ni et au moins une partie de surface et une partie intérieure, dans ladite partie de surface, la taille de étant plus faible que dans la partie intérieure **caractérisée en ce que**
la partie de surface avec la taille de grains fines a une teneur en phase de liant plus faible que la partie intérieure, il existe un maximum de teneur en Co entre la partie à grains fins et la partie à grains grossiers, et la partie de surface contient Cr de sorte que le rapport entre le paramètre A = ((% en poids de Cr/% en poids de phase de liant) + 0,01) dans la partie de surface et le paramètre B = ((% en poids de Cr/% en poids de phase de liant) + 0,01) mesuré au niveau de la partie du corps qui est caractériséee par la plus faible teneur en Cr est A/B > 1,5.

2. Plaquette/pastille en carbure cémenté selon la revendication précédente **caractérisée en ce que** la teneur en phase de liant de la partie de surface est < 1, de préférence < 0,9, de manière préférée entre toutes < 0,75 de celle dans la partie intérieure.

3. Plaquette/pastille en carbure cémenté selon l'une quelconque des revendications précédentes **caractérisée en ce que** la taille de grain WC de la partie de surface est < 1, de préférence < 0,9, de manière préférée entre toutes < 0,8 de celle dans la partie intérieure.

4. Plaquette/pastille en carbure cémenté selon l'une quelconque des revendications précédentes **caractérisée en ce que** la partie de surface contient Cr de sorte que le rapport entre le paramètre A = ((% en poids de Cr/% en poids de phase de liant) + 0,01) dans la partie de surface et le paramètre B = ((% en poids de Cr/% en poids de phase de liant) + 0,01) mesuré au niveau de la partie du corps qui est **caractérisée par** la plus faible teneur en Cr est A/B > 3,0.

5. Corps en carbure cémenté selon l'une quelconque des revendications précédentes **caractérisé en ce que** la zone de surface pauvre en liant a une largeur de 0,05 à 0,9 du diamètre/largeur du corps de carbure cémenté, de préférence de 0,1 à 0,5, de manière préférée entre toutes de 0,15 à 0,4.

6. Corps en carbure cémenté selon l'une quelconque des revendications précédentes **caractérisé en ce que** la composition du carbure cémenté est WC+liant avec une teneur en phase de liant nominale de 4 à 25 % en poids, de préférence de 5 à 10 % en poids et une moyenne arithmétique nominale d'intersection de taille de grain WC fritté de 1 à 15 µm, de préférence de 1,5 à 5 µm.

7. Corps en carbure cémenté selon l'une quelconque des revendications précédentes **caractérisé en ce qu'**il comprend une phase η.

8. Procédé de fabrication d'un corps en carbure cémenté ayant une zone de surface résistante à l'usure selon la revendication 1 comprenant les étapes consistant à :
- fournir un comprimé de carbure cémenté à partir d'une poudre unique ;
- éventuellement pré-fritter le comprimé et le meuler aux forme et taille souhaitées ;
- placer une poudre de produit d'affinage du grain contenant du carbone et/ou de l'azote sur au moins une portion de la surface exposée du comprimé/ébauche pré-frittée, contenant de préférence du Cr ;
- fritter le comprimé/ébauche pré-frittée et la poudre de produit d'affinage du grain de manière à diffuser le produit d'affinage du grain vers le centre du corps, ce qui forme une zone de surface vers l'intérieur à partir de la surface exposée sur laquelle le produit d'affinage du grain a été placé, et forme une zone d'intérieur ;
- éventuellement ajouter une pression de gaz isostatique au cours de l'étape finale de frittage pour obtenir un corps dense ;
- éventuellement effectuer une post-compression isostatique à chaud à une température inférieure à la température de frittage et à une pression de 1-100 MPa ;
- éventuellement meuler à la forme finale ;
- éventuellement éliminer des carbures et/ou du graphite indésirables de la surface par meulage ou un autre procédé mécanique quelconque ;
**caractérisé en ce que** ledit frittage est effectué pendant un temps adapté pour obtenir un corps dense avec une partie de surface avec une taille de grain plus faible et une teneur en cobalt plus faible que celle dans la partie intérieure, et un maximum de teneur en Co entre la partie à grains fins et la partie à grains grossiers.
